# EUROPEAN PATENT SPECIFICATION

(11) **EP 2 425 128 B1**
(45) Date of publication and mention of the grant of the patent: **19.12.2018**
(21) Application number: 10769352.5
(22) Date of filing: 23.04.2010
(51) Int. Cl.: F03D 1/04, F03D 3/04, F03D 3/00

(54) **COMBINED WING AND TURBINE DEVICE FOR IMPROVED UTILIZATION OF FLUID FLOW ENERGY**
KOMBINIERTE FLÜGEL- UND TURBINENVORRICHTUNG FÜR VERBESSERTE VERWENDUNG DER ENERGIE EINES FLÜSSIGKEITSFLUSSES
DISPOSITIF COMBINÉ À AILE ET TURBINE POUR UNE UTILISATION AMÉLIORÉE DE L'ÉNERGIE DE L'ÉCOULEMENT D'UN FLUIDE

(30) Priority: 28.04.2009 DK 200900546
(43) Date of publication of application: 07.03.2012
(73) Proprietor: Moeller, Sander Vitus, 5471 Soendersoe (DK)
(72) Inventor: Moeller, Sander Vitus, 5471 Soendersoe (DK)
(74) Representative: Orsnes, Henrik Egede
(86) International application number: PCT/DK2010/050092
(87) International publication number: WO 2010/124692

(56) References cited:
- WO-A1-2008/001080
- WO-A1-2008/001080
- CA-A1- 2 412 034
- US-A- 5 287 004
- US-A1- 2009 102 197
- US-B1- 7 368 828
- US-B2- 6 638 005

## Description

### FIELD OF THE INVENTION

The present invention relates to a device for production of electrical, mechanical or hydraulic energy by using wind or fluid flow energy, which device includes at least one rotor, where the wind or fluid flow results in rotor rotation around its axis, at least one base profile and at least one wing.

### BACKGROUND OF THE INVENTION

Prior art systems all seek to achieve focusing of flow at a kind of funnel effect against the incident flow.

Patent application published as WO 2008/001080 A1 (Taylor) on 03/01/2008 discloses a device to increase wind power through a wind turbine located on a roof, which forms the lower boundary of each rotor, and which is equipped with a horizontally lying wing with the chord tangentially oriented relative to the rotor, which forms an upper boundary of the turbine. The document only discloses tangentially deflected wings or wing sections of concave, asymmetric nature in relation to the wing chord. The layout uses the wind's direct influence on the turbine inlet by forming a funnel in front of the turbine. This creates a limited "suction effect" on the lee side.

The present invention seeks to achieve greater focus on slowing down through one or more edge positioned wings, thereby achieving increased gap effect due to the increased dynamic pressure drop caused by the edge positioned wing's barring area.

US 5287004 A discloses a further prior art device for production of electrical energy by using wind energy.

### SUMMARY OF THE INVENTION

The present invention provides a device, according to claim 1, for producing electrical, mechanical or hydraulic energy by using wind or other fluid flow.

This allows a maximum dynamic pressure difference between front and rear of the turbine thereby increasing the "suction effect" on the lee side.
The edge positioned wing is made pursuant to claim 2 with a solid or hollow structure.
The edge positioned wing is made in accordance with claim 3, provided with perforations in at least a portion of the wing. The edge positioned wing is made in accordance with claim 4, equipped with edge rifles. This ensures that the device is adaptable to the landscape or a given building design and architecture, or just give a distinctive design. Moreover, they provide better flow characteristics when the wind or fluid stream passes them.
The edge positioned wing is in accordance with claim 5, prism-shaped, flat, convex, concave or different flow dynamically designed.

In a preferred embodiment, see claim 6, at least one longitudinal wing is located between the edge positioned wing and the rotor oriented with its chord essentially perpendicular to the rotor. The longitudinal wing may in accordance with claim 7, be integrated in the edge positioned wing. The longitudinal wing may in accordance with claim 8, be flat, convex or concave or adapted to the periphery of the rotor. This will, like perforations in the edge positioned wing design provide better flow characteristics when the wind or fluid stream passes through the turbine flow channel.

In a particularly preferred embodiment in accordance with claim 9, at least one lamella is located in the turbine flow channel (8) bounded by the edge positioned wing and bottom profile . This ensures that the wind or fluid flow is directed towards the turbine, rather than along the turbine.

The bottom profile is in accordance with claim 10, flat, curved or adapted the geometry of the rotor.

At least one turbine lamella is according to claim 11, located in the turbine flow channel. This will also ensure that wind or fluid flow is directed towards the turbine.

In a specific embodiment, cf claim 12, two or more edge positioned wings are oriented with their chords against the rotor.

### BRIEF DESCRIPTION OF THE DRAWINGS

In the following the invention will be explained with reference to the drawings, wherein:
Fig. 1A shows the system in an embodiment with a simple, flat, edge positioned wing,
Fig. 1B shows the system shown in Figure 1A with perforations in the wing,
Fig. 1C shows the system shown in Figure 1A with arbitrary cuts in the edge of the wing,
Fig. 1D shows the system shown in Figure 1A with harmonic cuts in the edge of the wing,
Fig. 1E shows the system shown in Figure 1A with perforations and cuts the edge of the wing,
Fig. 1F shows the system in an embodiment with a bulky edge positioned wing,
Fig. 2A shows the system in a second embodiment with a flat, longitudinal wing,
Fig. 2B shows a cross section of the system shown in Figure 2A,
Fig. 2C shows the system in a second embodiment with a bulky, longitudinal wing,
Fig. 2D shows a cross section of the system shown in Figure 2C,
Fig. 3A-B shows the system in a third embodiment with turbine inlet lamellas,
Fig. 4A shows a cross section of the turbine adapted arbitrary flow,
Fig. 4B shows a cross section of the turbine adapted unilateral flow,
Fig. 5A shows the system in an example, which does not form part of the invention, with a clamped propeller-rotor,
Fig. 5B shows the system in an example, which does not form part of the invention, with a rotating propeller-rotor,
Fig. 5C shows the system in a fourth embodiment with upright rotor,
Fig. 6A-C shows the system in a cascade construction,
Fig. 7A-D shows an embodiment in which the system is mounted on a ridge and a house corner,
Fig. 8A-C shows an embodiment of a cascading construction mounted on a ridge and several corners of the house,
Fig. 9A-C shows the system in a deflection example,
Fig. 10A-C shows the system in another deflection example,
Fig. 11A-D shows the system in a fifth embodiment with more than one edge positioned wing,
Fig. 12 shows the system in a deflection example with hanging point near the bottom profile,
Fig. 13A-B shows the system in a deflection example with hanging point along the chord of the edge positioned wing,
Fig. 14A-J shows various shapes of the edge positioned wing,
Fig. 15A-C shows the system in a sixth embodiment in which the system is built into the roof,
Fig. 16A-B shows a system similar to Figure 1B built into a roof, and
Fig. 17 shows the cascade configurations of the system installed at all building corners.

### DETAILED DESCRIPTION OF THE INVENTION

The invention uses wind and fluid flow energy in a new way by using static structures' ability to generate pressure differences and velocity changes in fluid flow when the flow is forced around obstructive objects or through the narrow passages.
The present invention relates to a system for utilization of flow energy in wind or other flowing fluids. The invention uses a new method for utilization of flow energy, characterized by one or more static wings to block a portion of the flow, while another part passes through a turbine or directly above the turbine. The wing system is characterized by allowing maximum airflow passes through the turbine, in addition to allowing a portion of flow passing between the turbine and the vertical wing, either through slits or through perforations or by allowing the lower edge or lower edge profile of the wing to form an upper boundary of the turbine.
The edge positioned wing(s) (1) can be completely flat or aerodynamically designed with their wing chords directed to the rotational axis of the turbine. Moreover, the edge positioned wing (1) generally has a symmetrical structure relative to its chord. A bottom profile (4) located opposite the edge at the wing (1) defines the lower boundary of turbine flow channel (8) in which the rotor (5) is located.
The edge positioned wing (1) may be combined with one or more wings / profiles (2) located so that their bottom represents the upper boundary of the turbine chamber (8). The top of the wing / profile (2), forms together with the lower edge of the edge positioned wing (1) one or more slits (7) or perforations (10) immediately above or near the top of the wing / profile (2). Perforations (10) can be located on the edge positioned wing (1) if the wing / profile (2) is omitted.
The system may also have one or more lamella (3), which serve to deflect the longitudinal wind or flow fields, so as to force the flow through the turbine chamber (8), slit (7) or perforations (10) and over the edge positioned wing (1) rather than parallel to the edge positioned wing (1). The lamella (3) also strength the construction and may be designed as straight, concave, convex or any combination in between.
The system is ridge based and uses wind and other fluid currents' ability to generate pressure and velocity changes when the flow must pass around static structures. In contrast to known similar systems the invention uses a simple, static barring wing / wings to generate a lower pressure which sucks the flow through the turbine, caused by the increased dynamic pressure difference between the inlet side and lee side, whereby the "suction effect" on the lee side increases.

The effects achieved are higher pressure differential across the turbine. The slit (7) between the wing and turbine, and/or perforations (10) in the wing, serves to create a quick and steady flow through and immediately around of the turbine (5).

The system is characterised by being able to be combined with any known rotor types and in a simple and aesthetic manner to increase the efficacy of these. The system is particularly suited to static location on ridges, skyscrapers, landscape protrusions, etc.
The invention comprises at least the edge positioned wing (1), rotor (5) and lamella (3) attached to the wall, roof, house corner, landscape projection as well as under water ridges, river bottom, waterfall or similar flow-intensive sites.

The system can be designed so it is double-acting and works by currents from both sides.

The system is designed so it can be built into buildings, landscapes, soil or similar, or designed for placement on such structures.

In the following description a horizontal rotor type is defined as a rotor with rotor wings and a rotating shaft where the flow moves longitudinally along the rotating shaft. A vertical rotor type is defined as a rotor with rotor wings and a rotating shaft where the flow is moving at right angles onto the rotating shaft along its length. The chord is defined as the line between the wing front and rear edge (the upper and lower edge of the edge positioned wing).

### System components:

With reference to the above description and subsequent figure description and embodiments the components of the invention reference numbers as indicated in brackets in front of the title.

### (1) The edge positioned wing :

i. Oriented with the chord against the rotor
ii. For so-called vertical turbines (Savonius, Darrieus., Banki, Ossberger or similar) the edge positioned wing chord is pointing towards the rotary shaft or can bend to an angle so that the chord is tangential to the outer radius of the rotor.
iii. For horizontal turbines ("normally" known as propellers on e.g. Vestas Wind Turbines) the edge positioned wing chord is parallel to the plane which is perpendicular to the axis of rotation, or angled relative to this level, if the turbine is rotating.
iv. The purpose of the edge positioned wing is to provide maximum dynamic pressure difference between front and rear of turbine by blocking a larger area of the flow over the turbine.
v. In order to achieve better flow characteristics the wing may be perforated or riffled in different ways, so a portion of flow can pass through them. The edge positioned wing (1) may have a hollow or solid structure.

### (2) The longitudinal wing / The upper turbine flow-delimiting wing:

i. May be integrated into the edge positioned wing (1).
ii. For vertical turbines the chord is perpendicular or nearly perpendicular on the axis of rotation.
iii. May be flat, convex, concave or aerodynamically adapted the periphery of the rotor.
iv. May as the edge positioned wing (1) be perforated, riffled, hollow or solid in structure.

### (3) Lamellas and gable profile:

i. Divide the system into at least one and up to an infinite number of turbine flow channels (8) by consisting of at least two and up to an infinite number of lamellas / gable profiles.
ii. Bearings for vertical turbine rotor shafts or open for through going rotor.
iii. Serves as flow lamella and prop and carries the edge positioned wing (1), the longitudinal wing (2) and the rotor (5). May also bear the edge positioned wing (1) alone or the longitudinal wing (2) alone.
iv. Lamellas in the gables may be designed with an opening which forms the bearings for the rotor shaft. The intermediate strips can be designed with an opening for a continuous rotor (5) or an opening which forms the bearings for one through going rotor shaft or two associated rotor shafts.
v. Serve as attachment points on terrain, roof, wall or similar.
vi. May as the edge positioned wing (1) be perforated, riffled, hollow or solid structure.

### (4) Bottom Profile / The lower turbine inlet-delimiting profile:

i. Forms the bottom of the turbine. The bottom need not be oriented horizontally, but may be placed vertically or in any other direction depending on local conditions.
ii. Bottom profile may consist of the present surface on which the system is fastened, such as wall, roof, soil or rock.
iii. Bottom profile may be similar to the longitudinal wing (2), be completely flat, curved or adapted the turbine periphery.

### (5) Rotor:

i. May be combined with any known turbine types.
ii. The rotor produces in vertical rotor types ("Cross Wind turbines") the rotational energy in the transmission housing (6), where it is converted into either electrical, mechanical or hydraulic energy.
iii. For horizontal turbine types (propeller) the energy is produced in the centrally located turbine in response to the rotor shaft. Here rotational energy is converted into electrical, mechanical or hydraulic energy.

### (6) Transmission housing:

i. For types with vertical rotor the transmission takes place in the transmission housing (6) located in the system's end gables.
ii. There may, for long transmission systems be houses built in the lamellas (3) with appropriate adaptation of the geometry of the lamellas.
iii. Inserted in the roof the transmission house may be built entirely or partially into the roof, whereby the generator, gearbox or similar energy input mechanism will be serviced from the inside of the roof.

### (7) Gaps:

i. Gaps are established between wing (1) and wing (2) and between gable wing (9) and transmission housing (6), ridge or other support. This is similar to slots on a conventional wing.
ii. The gap can be in full length from lamella (3) to lamella (3) or be divided into smaller sections. The gap may in the gable wing (9) be full length or divided into smaller sections.

### (8) Turbine flow channel:

i. The turbine flow channel consists of an arrangement of the edge positioned wing (1) or the longitudinal wing (2), bottom profile (4) and lamellas (3).
ii. The interior of the turbine flow channel may be provided with lamellas (12) to deflect incoming and outgoing fluid flow.

### (9) Gable wing

i. The gable wing has a stiffening effect on the construction laterally.
ii. The gable wing increases the obstructive area so large pressure differential occurs between the front and back of the turbine flow channel (8).
iii. May as the edge positioned wing (1) consists of several other wings placed above each other and / or be perforated (10) and / or be provided with rifled edges (11).
iv. May be formed so as to follow contours on the edge positioned wing (1) and the longitudinal wing (2), or have contour, slit/gap and perforations of artistic or decorative character.

### (10) Perforation in the wings

i. Serves the purpose of creating vortices in the lee side, thus creating a more laminar flow. Does the same principle as slots on a conventional wing.
ii. Can be round, squared or of arbitrary geometry, including artistic or decorative design.

### (11) Jagged wing edges

i. Edges of wings may be jagged or riffled like perforations (10), creating small flow vortices near the edge positioned wing (1) surface in the lee side, with the same effect as vortex generators.
ii. May be arbitrarily designed, including having decorative or artistic nature.

### (12) Turbine flow channel lamellas:

i. The interior of the turbine flow channel (8) may be provided with lamellas (12) to deflect incoming and outgoing fluid flow.

The invention is explained in more detail below with reference to examples where;

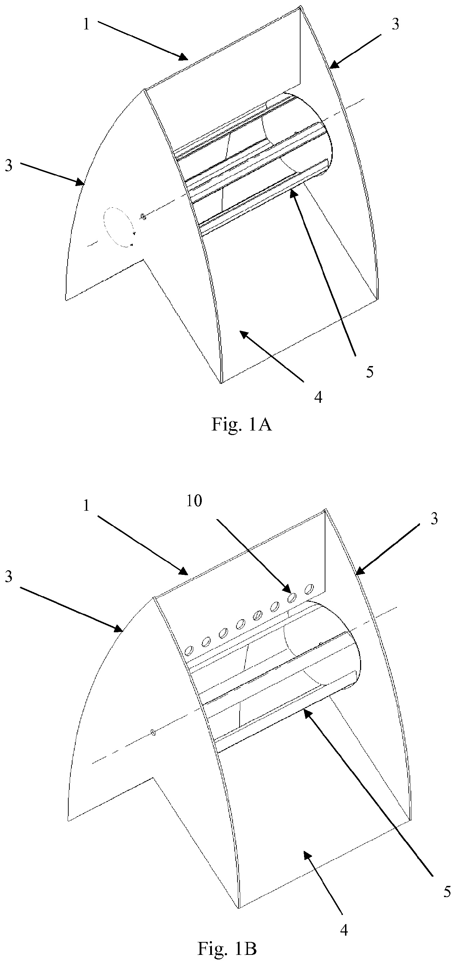

Figures 1A to 1F show the invention in its simplest embodiment, consisting of the edge positioned wing (1) with the chord oriented towards the rotor (5) and where the gable profiles (3) maintain the edge positioned wing (1) and the rotor (5) at the rotor shaft. The lower boundary of the turbine flow channel (8) is defined by the bottom profile (4) onto which the gable profiles (3) are attached. The upper boundary of the turbine flow channel (8) is defined by the edge positioned wing (1). The rotor (5) may be designed as a vertical rotor, for example a Banki, Ossberger or Cross Wind Turbine.

Figure 1A shows the invention with a simple, flat, edge positioned wing (1) with a chord oriented towards the rotor (5).

Figure 1B shows the same as Figure 1A in an embodiment with perforations (10) in the edge positioned wing (1).

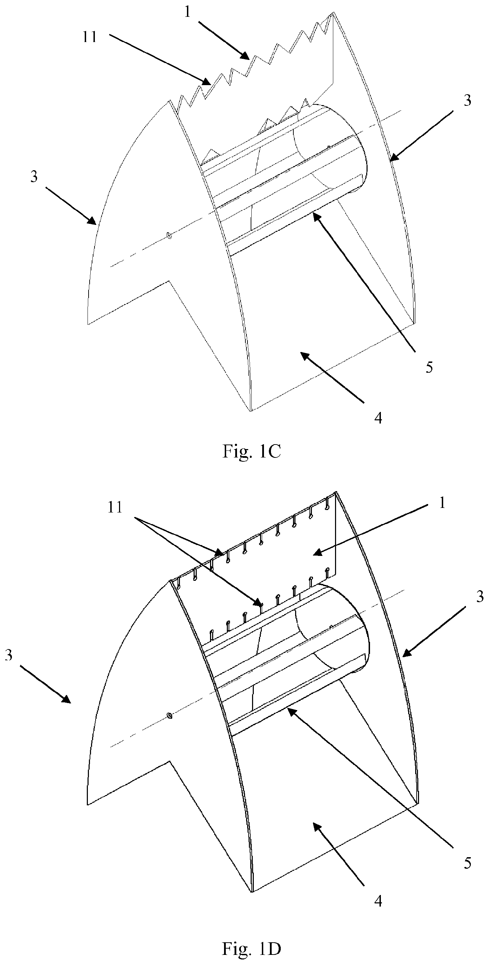

Figure 1C and 1D show the same as Figure 1A in an embodiment in which the edge positioned wing (1) is riffled.

Figure 1C shows the edge rifles (11) in the form of serrations at the edge of the edge positioned wing (1).

Figure 1D shows the harmonic edge rifles (11) in the form of cuts in the edge positioned wing (1).

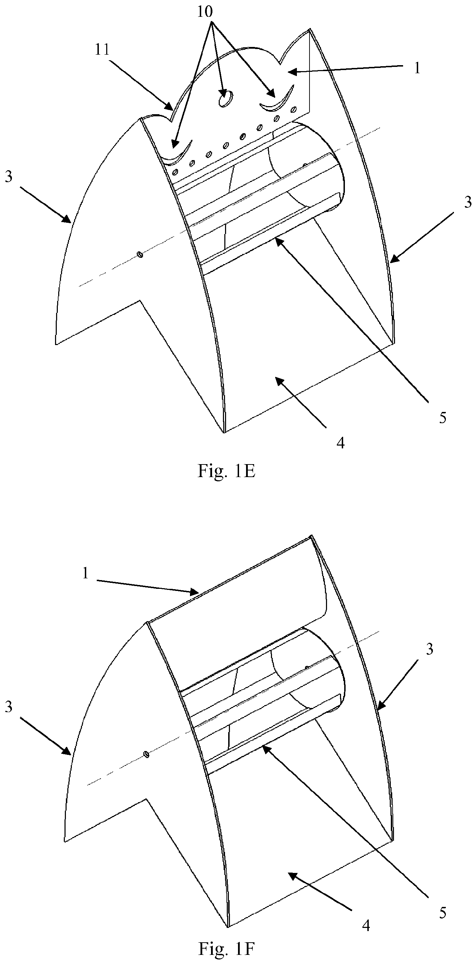

Figure 1E shows riffles (11) in the form of quaint edge cutting into the edge positioned wing (1) combined with perforations (10) in the edge positioned wing (1). This appears to the system in a simple and aesthetic manner.
Figure 1F shows the invention with a bulky, edge positioned wing (1) with different surface profile geometry with the chord oriented towards the rotor (5).

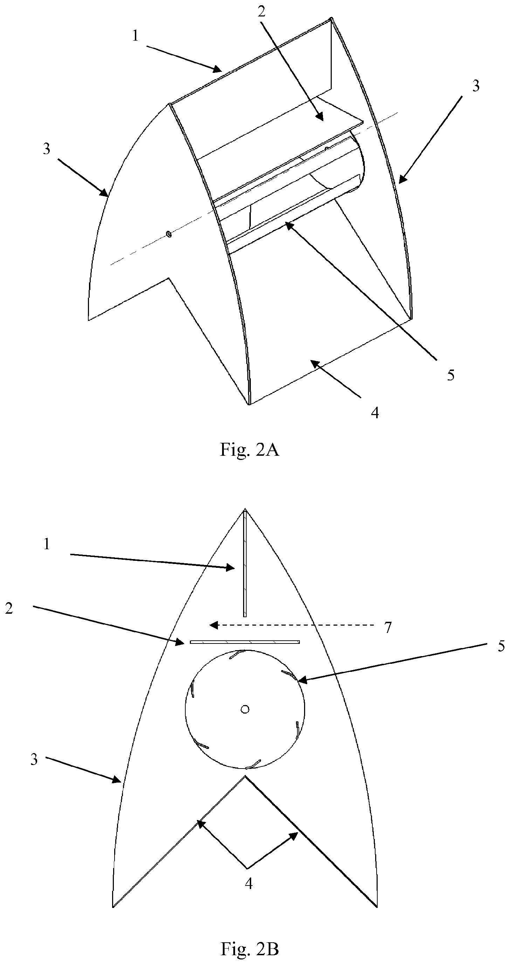

Figure 2A to 2D show the invention in a specific embodiment with the introduction of a longitudinal wing (2) between the edge positioned wing (1) and the rotor (5).

Figure 2A shows the invention in a specific embodiment with the introduction of a flat, longitudinal wing (2) between the edge positioned wing (1) and the rotor (5). This creates a gap (7) with the same function as the perforations (10), cf earlier descriptions. The lower edge of the longitudinal wing (2) represents here the upper boundary of the turbine flow channel (8).

Figure 2B shows the same as Figure 2A in cross section.

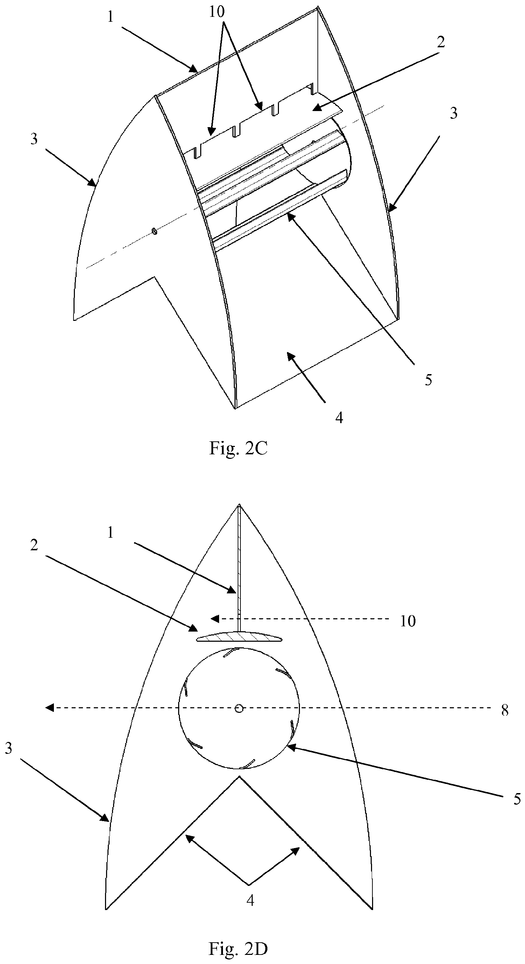

Figure 2C shows the invention with bulky, long voluminous wing (2) combined with the edge positioned wing (1) in a manner resulting in perforations (10).

Figure 2D shows the same as figure 2C in cross section.

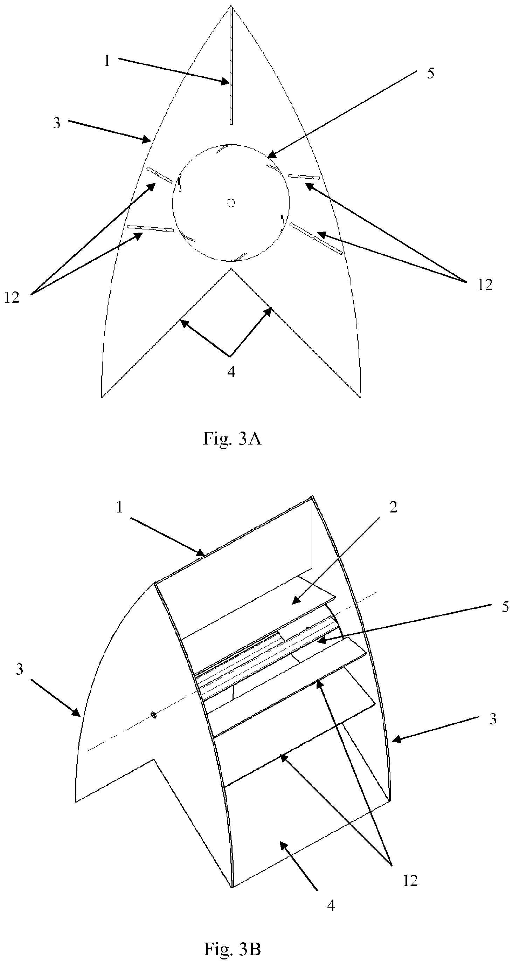

Figure 3A shows the invention in a specific embodiment with the introduction of turbine flow channel lamellas (12).

Figure 3B shows the invention in a specific embodiment with the introduction of a longitudinal wing (2) and turbine flow channel lamellas (12).

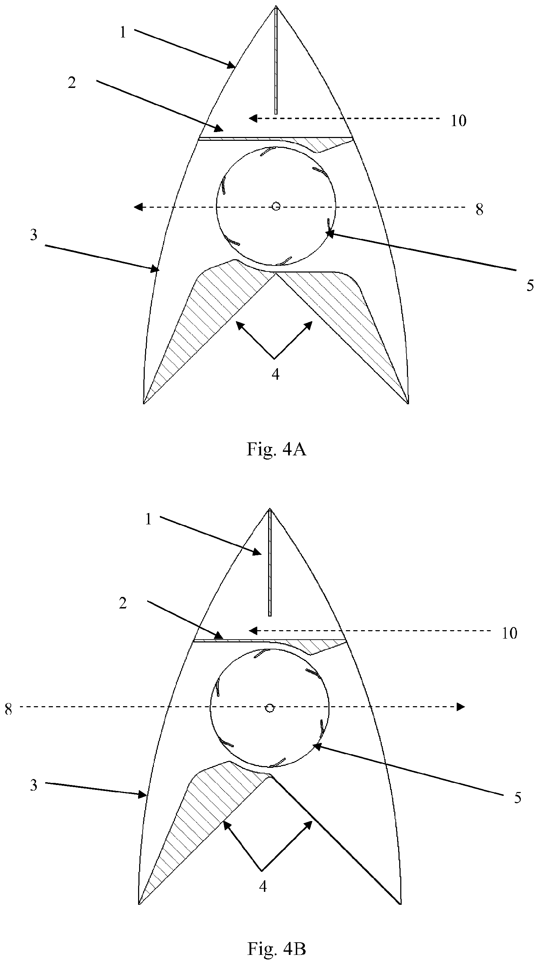

Figures 4A and 4B show a cross-sectional view of the turbine flow channel (8) adapted to the rotor (5) geometry by special geometric shape of the longitudinal wing (2) and bottom profile (4).

Figure 4A shows the symmetrical structure of the turbine flow channel (8) adapted arbitrary flow from both sides.

Figure 4B shows the symmetrical structure of the turbine flow channel (8) adapted unilateral flow from a predominant direction.

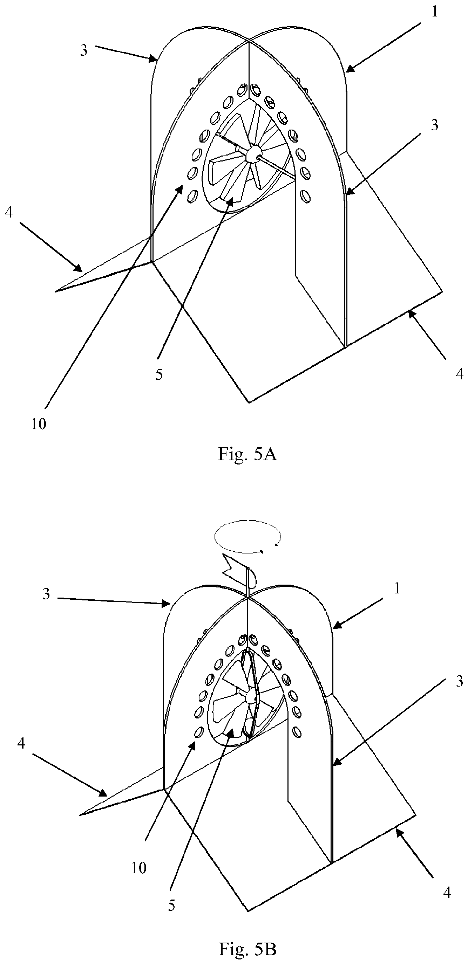

Figures 5A-5B show the invention in a specific embodiment with propeller-rotor.

Figure 5A shows the invention in a specific embodiment with a horizontal rotor, for example a propeller rotor, which rotor is fixed with the rotor plane parallel to the edge positioned wing (1).

Figure 5B shows the invention in a specific embodiment with propeller rotor, which rotor is pivoted with center point between the edge positioned wing (1) and flow lamella (3).

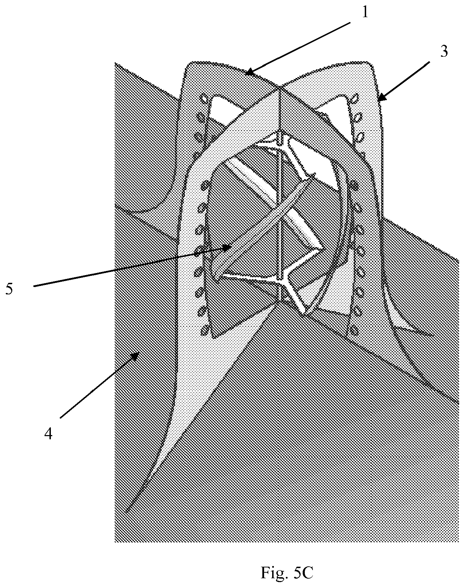

Figure 5C shows the invention in an embodiment in which the rotor (5) orients the axis of rotation along the intersection of the edge positioned wing (1) and flow lamella (3). The rotor (5) can be designed as a vertical turbine, for example a Savonius or Darrieus turbine with propeller-shaped wings.

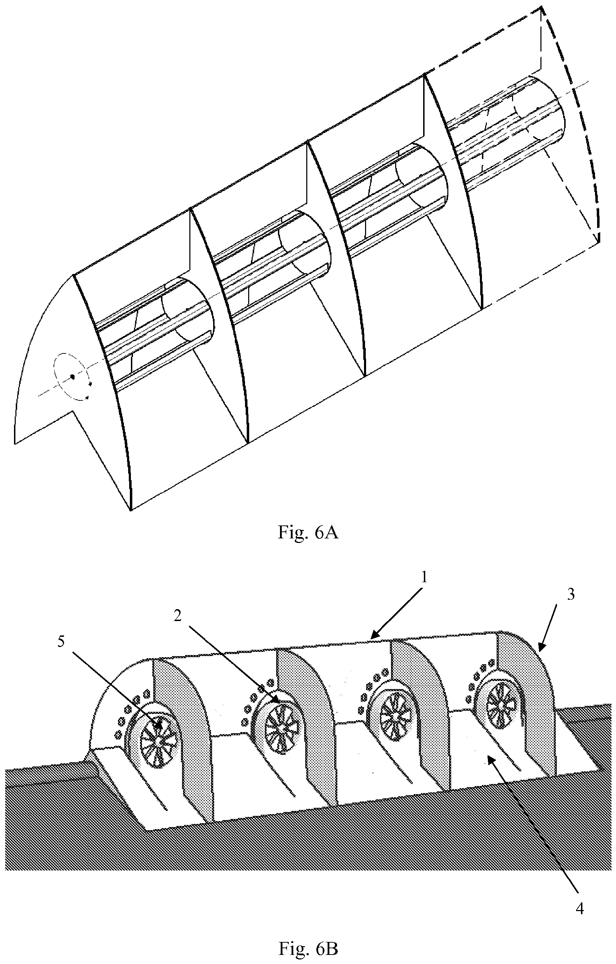

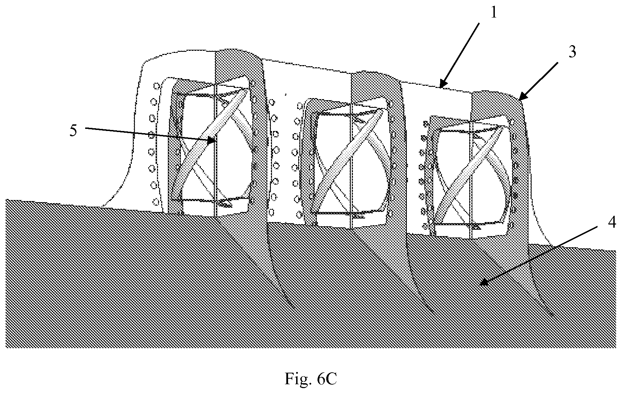

Figures 6A-6C show the invention in the cascade style, where the invention in relation to figures 1A-1F, 2A-2D, 3, 4A-4B and 5A-5C and all the forms, multiplied into any number.

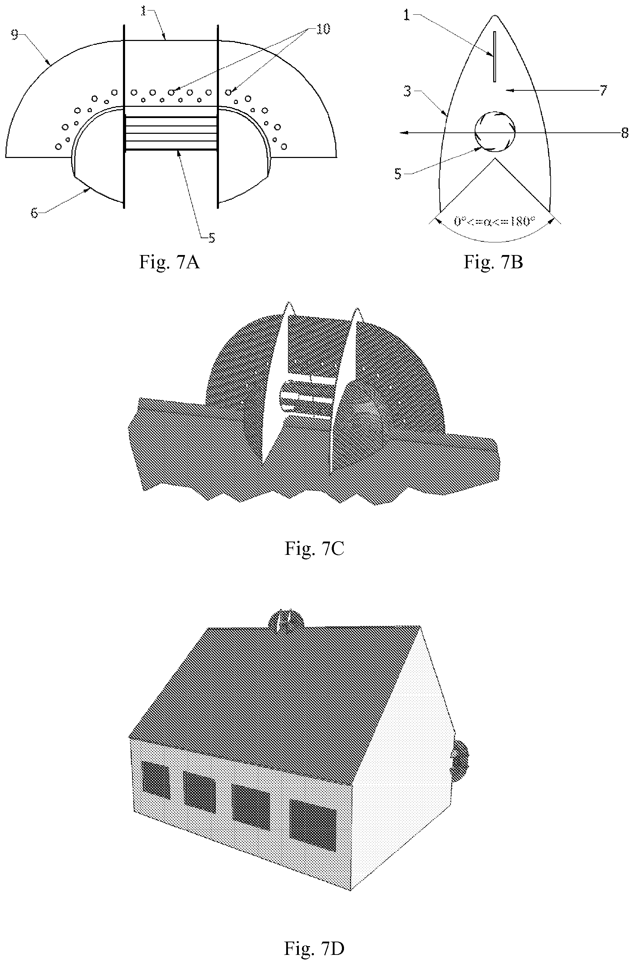

Figures 7A-7D show the invention in a preferred form where the bottom profile (4) is formed by the local surface, angled arbitrarily between 0 ° and 180 °, illustrated by mounting on any roof and house corner. In the example there is shown a gable wing (9) and transmission housing (6). The gable wing (9) can be omitted, but would mean a loss of power. The transmission house (6) can be omitted if the rotational energy turnover occurs by direct interaction between the gable lamellas (3) and rotor (5).

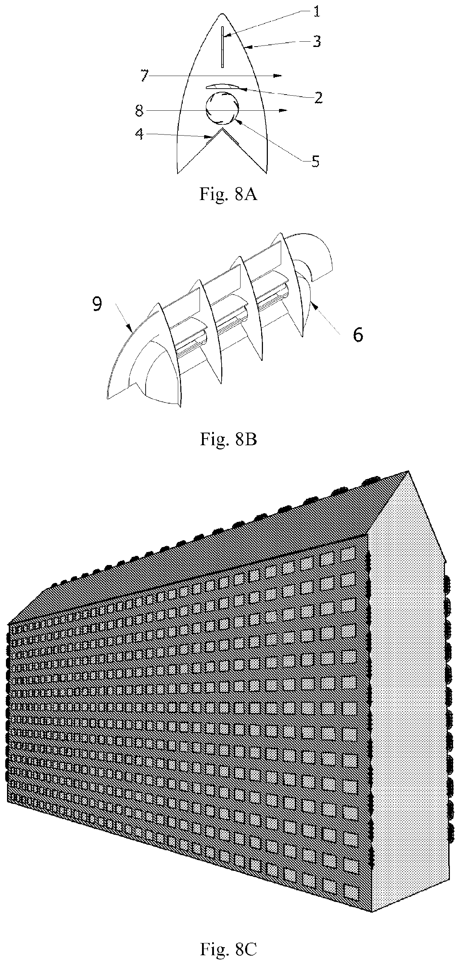

Figures 8A-8B shows the invention in a preferred embodiment where a long voluminous wing (2) has been introduced between the edge shaped wing (1) and rotor (5).

Figure 8B shows a cascade installation of the invention, which generates three turbine flow channels (8). The rotors (5) is embedded in the gable profiles (3) and internally connected via a common rotor shaft that delivers rotational energy in transmission housings (6), where it is transformed into electrical, mechanical or hydraulic energy. In the ends, the invention further equipped with gabled wings (9) to the lateral stiffening and for aesthetic reasons.

Figure 8C shows the embodiment of Figure 8B mounted on a building in multiplied numbers and at all edges and ridges.

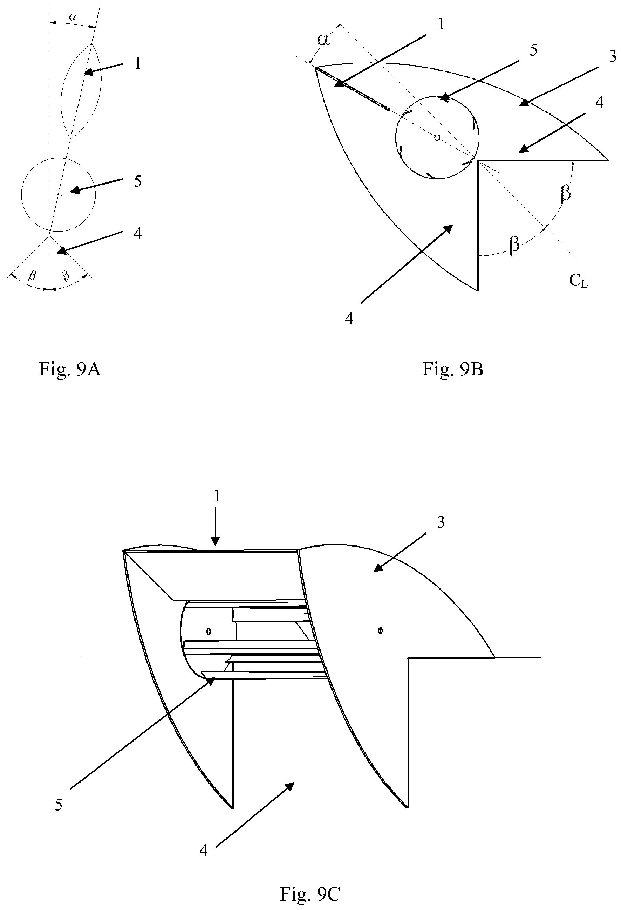

Figure 9A and 9B show the invention in an example, where the angle **β** divides the bottom profile into two equal halves marked with the center line **C_{L}**. The arbitrary angle **α** marks the edge positioned wing (1) deflection from the center line intersection of bottom profiles (4) peak.

Figure 9C shows Figure 9B in an embodiment mounted on a corner, for example a building with flat roof. The figure 9C is shown with walls and roof as bottom profile (4).

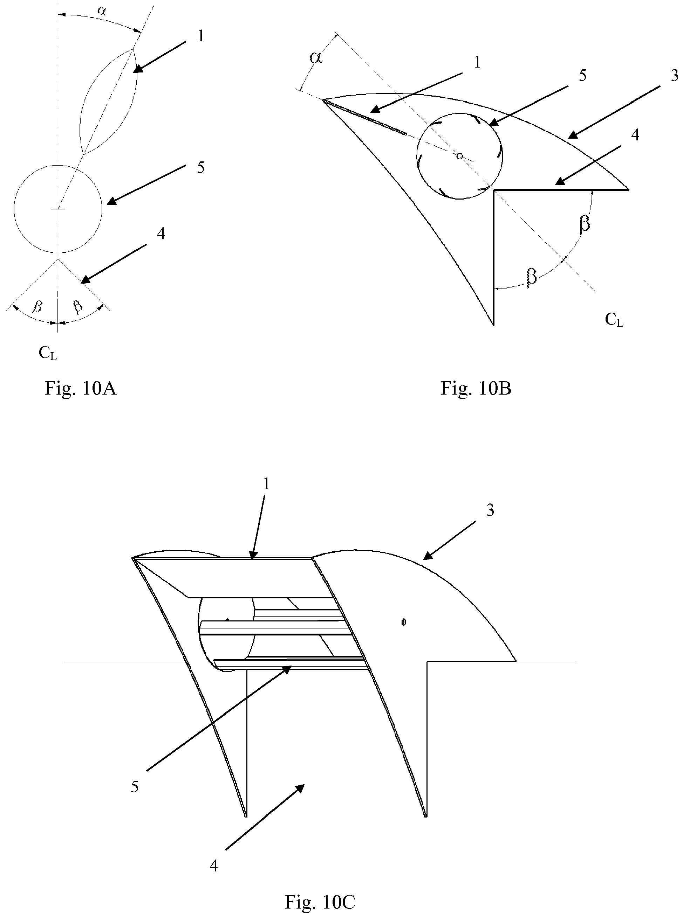

Figure 10A and 10B show the invention in a bending example, where the angle **β** divides the bottom profile into two equal halves marked with the center line **C_{L}**. The arbitrary angle **α** marks the edge positioned wing (1) deflection from the center line of intersection of the rotor (5) hub.

Figure 10C shows Figure 10B of the example located on the corner, for example building with flat roof. The figure 10C is shown with walls and roof as bottom profile (4).

The edge positioned wing (1) shown both in Figure 9A-C and Figures 10A-C is clamped by means of the lamellas (3) in an angle corresponding to the arbitrary bending angle **α**.

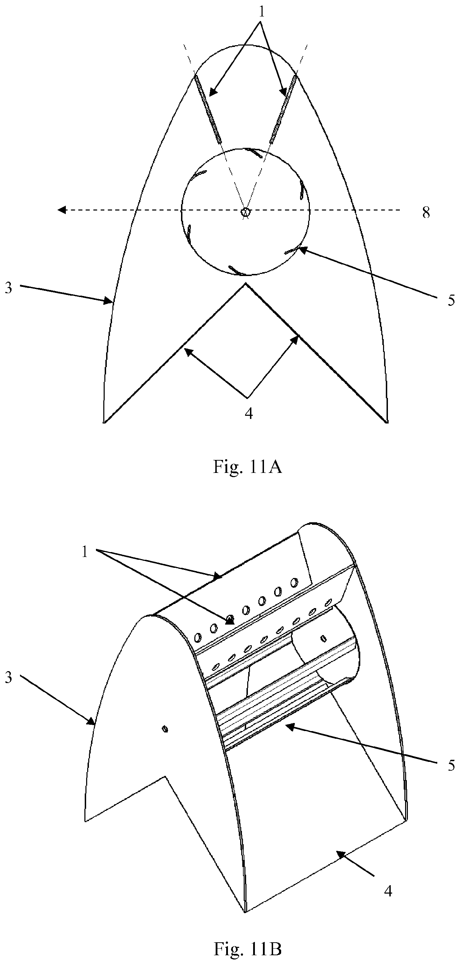

Figure 11A-11D show examples with more than one edge positioned wing (1). The invention can in principle be provided with an infinite number of edge positioned wings in accordance with the bending principles indicated in Figure 10A and 10B.

Figure 11A and 11B show the execution example, where there are two edge positioned wings (1) with chord oriented to the rotor (5).

Figure 11A shows in cross section the invention with double edge positioned wing (1).

Figure 11B shows the invention with double wing (1) in perspective.

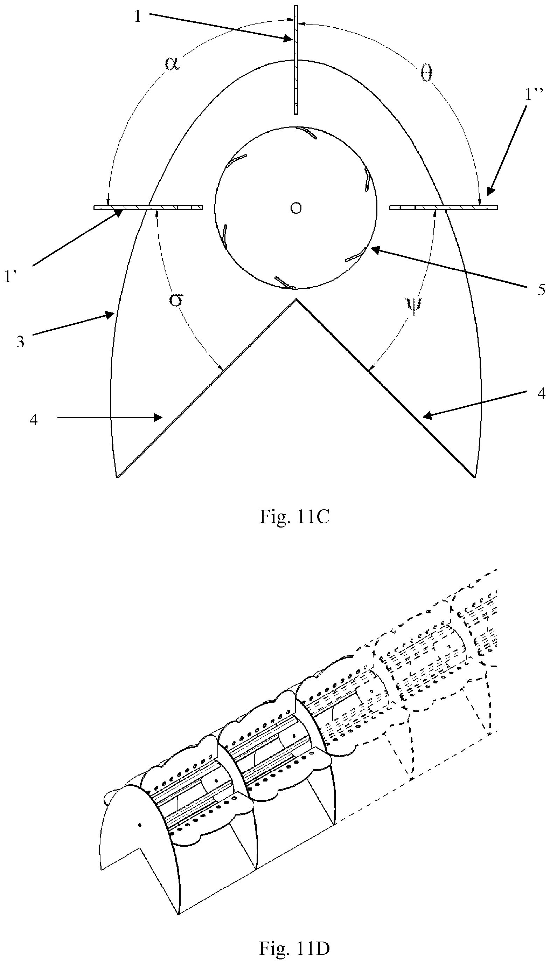

Figure 11C and 10D shows the execution example, where there are three edge positioned wings (1, 1', 1") with chord oriented to the rotor (5). Alternatively, wings (1', 1") are designed like turbine inlet lamellas (12).

Figure 11C shows the invention with three feathered wings (1) in cross section. The angles **a**, **q**, **s** and **y** represent arbitrary angles relative to the bottom profile (4).

Figure 11D shows the embodiment with three edge positioned wings in perspective.

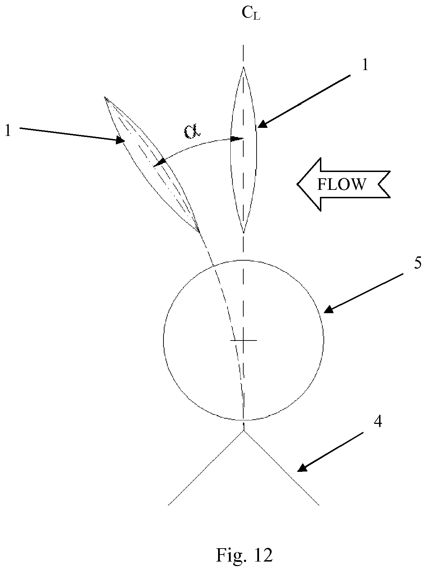

Figure 12 shows examples of the invention with respect to the flow affected mechanical deflection of the edge positioned wing (1) around a suspension point located near the top of bottom profiles (4), wherein the edge at the wing (1) in the unaffected state will be oriented with the chord against the rotor (5). The deflection angle of the chord is marked with **α**. This deflection can occur in the embodiments, where lamellas (3) are omitted or are located below the longitudinal wing (2). Hereby the edge positioned wing (1), the gable wing (9) and possibly the longitudinal wing (2) are formed in a single unit.

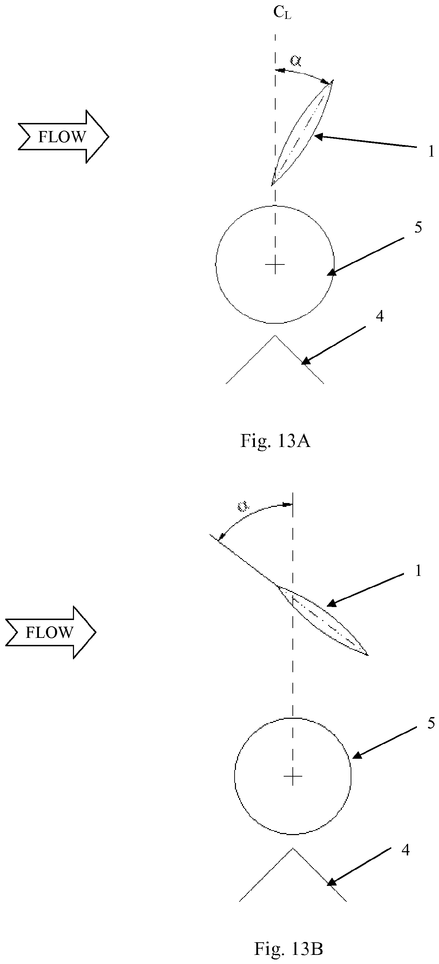

Figure 13A and 13B show examples of the invention in relation to any previously described embodiment, wherein the edge positioned wing (1) may be deflected around a suspension point located along the edge positioned wing chord from the wing edge nearest the rotor (5) to an arbitrary point along the edge positioned wing chord behind the rotor (5). The deflection can be fixed or loosely hung and thus made dependent on the flow's effect on the edge positioned wing (1), in which this chord have a tangential characteristic in relation to the rotor (5).

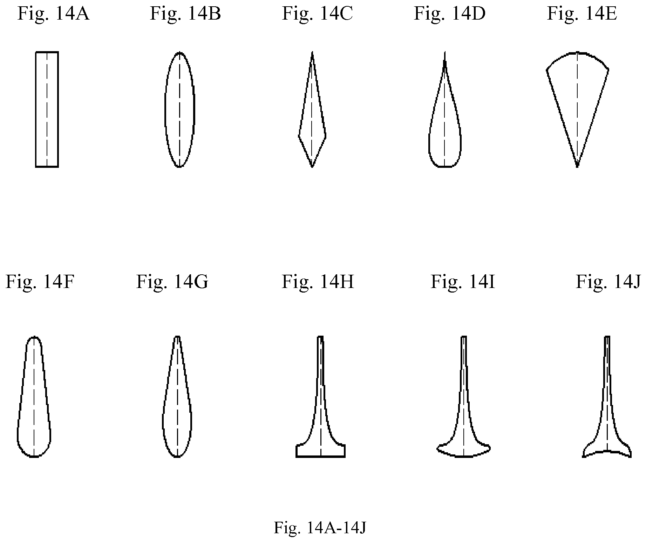

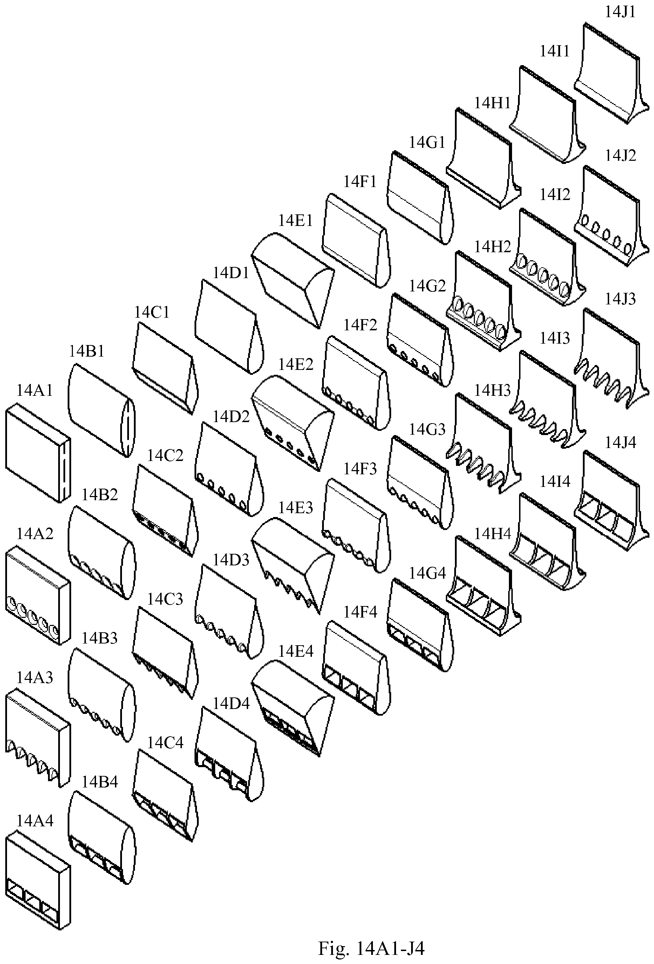

Figure 14 shows examples of a number of possible shapes of the edge positioned wing (1). The chord is indicated by dotted line.

Figure 14A shows a completely flat wing.

Figure 14B shows an oval wing.

Figure 14C shows a prism-shaped wing.

Figure 14D shows a teardrop-shaped wing.

Figure 14E shows a hybrid between round and sharp edged wing.

Figure 14F shows an oblong, rounded wings.

Figure 14G shows an oval, teardrop-shaped wing.

Figure 14H shows a wing with broad, flat base integral of the longitudinal wing (2) of the edge positioned wing (1).

Figure 14i shows a wing with broad, rounded, convex base integral the longitudinal wing (2) of the edge positioned wing (1).

Figure 14j shows a wing with a broad concave base integral of the longitudinal wing (2) of the edge positioned wing (1).

Figures 14A1 to 14J4 show further embodiments of the aforementioned designs. Notation 1 indicates massive embodiments. Notation 2 indicates perforated embodiments. Notation 3 indicates edge riffled embodiments. Notation 4 shows square, perforated performance forms.

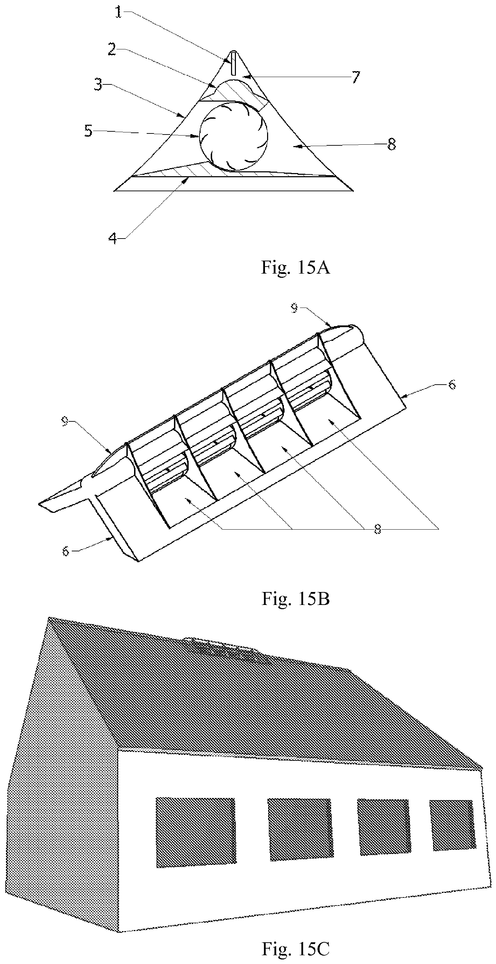

Figures 15A to 15C show the invention fully embedded in the roof, where only the edge positioned wing (1) is above the ridge. The longitudinal wing (2) is shown in a preferred embodiment in which it is designed to follow the shape of the remaining roof structure. The embodiment is designed in such a way that the transmission housing (6) is made part of the roof, by which transmission can be serviced from below the ceiling. The turbine flow channel (8) is asymmetrically adapted to the rotor of the Banki / Ossberger or similar vertical rotor type. The Geometry of the upper side of the longitudinal wing (2) is adapted the ridge of the roof and is both concave and convex. The edges of the lamellas / gable profiles (3) follow the contours of the wings (1) and (2).

The number of turbines flow channels (8) is here multiplied up to four, but can in principle be reduced to one or increased in infinite numbers. In each turbine flow channel (8) a separate rotor is located. The rotors (5) are mutually connected via a common shaft with bearing in gable profiles (3). Rotational energy is transferred through the shaft in the transmission housings (6), where it converted to electrical, mechanical or hydraulic energy. The turbines flow channels (8) can be equipped with turbine inlet lamellas (12) as shown in Figure 3A and 3B.

Figure 15A shows the embodiment in cross section.

Figure 15B shows the embodiment in perspective.

Figure 15C shows the embodiment integrated into a building.

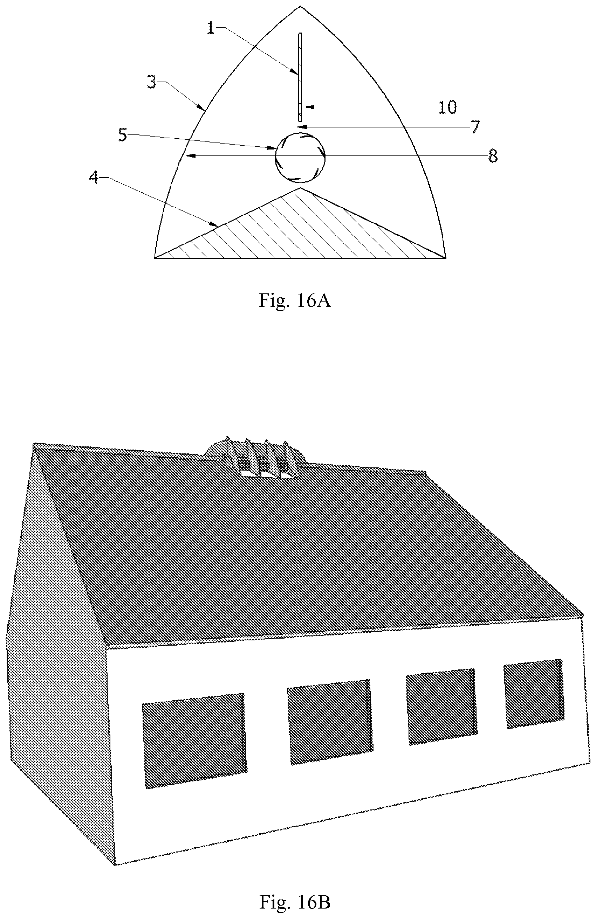

Figure 16A and 16B show the invention in an embodiment similar to the principles in Figure 1B.

Figure 16A shows the invention in cross section.

Figure 16B shows the invention integrated into the roof of a building.

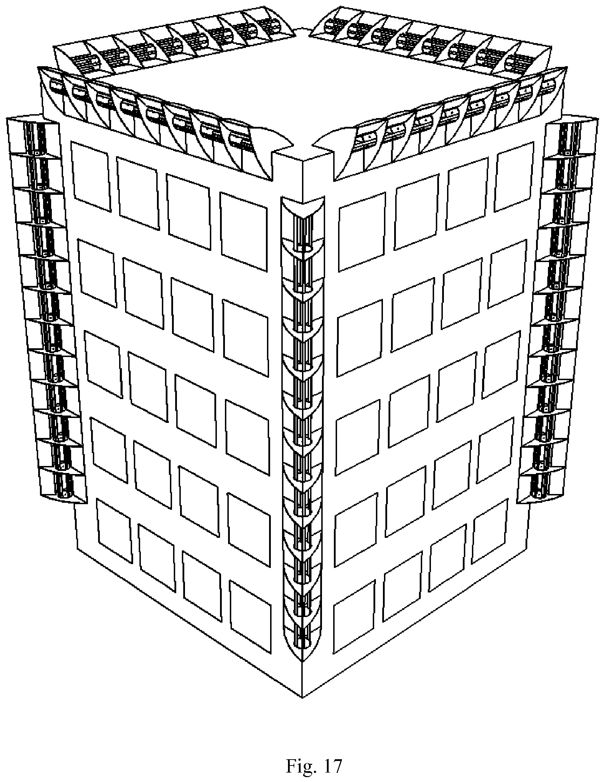

Figure 17 shows the invention in cascading style similar to Figure 8C, where the invention in relation to figures 1A-1F, 2A-2D, 3, 4A-4B and all the intermediate forms, is mounted on a high-rise building. The invention is suitable for mounting on all building corners.

## Claims

1. Device for production of electrical, mechanical or hydraulic energy by using wind or fluid flow energy, which device includes at least one rotor (5), where the wind or fluid flow results in the rotor rotating around its axis, at least a bottom profile (4) defining the lower boundary of the rotor of the device and at least one wing defining the upper boundary of the rotor of the device, whereby:
the rotor (5) is axially connected to a generator, said rotor designed as a cross-flow turbine, where the blades of the rotor are peripherally located providing an open space between the central axis of the rotor and the blades, and said blades configured to allow the fluid flow to pass through from both opposite sides of the rotor axis, and
the wing (1) is edge positioned and has two sides, wherein the chord of said edge positioned wing is oriented towards the rotor (5) and toward the bottom profile (4), wherein the edge positioned wing blocks a part of the wind or fluid flow over the rotor and causes the wind or fluid to flow around the edge positioned wing (1) thereby increasing a pressure difference between the front and rear side of the rotor (5) said pressure difference drives the wind or fluid through the rotor (5).

2. Device according to claim 1, **characterized in that** the edge positioned wing (1) has a solid or hollow structure.

3. Device according to claim 1, **characterized in that** the edge positioned wing (1) is provided with perforations in at least a portion of the wing.

4. Device according to claim 1, **characterized in that** the edge positioned wing (1) is edge riffled.

5. Device according to claim 1, **characterized in that** the edge positioned wing (1) is prism-shaped, flat, convex, concave or differently flow dynamically designed.

6. Device according to any one of the claims 1-5, **characterized in that** the device further comprises at least one longitudinal wing (2) located between said edge positioned wing (1) and said rotor (5), said longitudinal wing (2) being oriented with its chord essentially perpendicular to the edge positioned wing (1).

7. Device according to claim 6, **characterized in that** the longitudinal wing (2) is integrated into the edge positioned wing (1).

8. Device according to claim 6 or 7, **characterized in that** the longitudinal wing (2), in relation to the wing cross section is prism-shaped, flat, convex, concave or adapted the periphery of the rotor (5).

9. Device according to any of the preceding claims, **characterized in that** the device further comprises at least one lamella (3) located in a turbine flow channel (8) bounded by the edge positioned wing (1) and the bottom profile (4).

10. Device according to any one of the preceding claims, **characterized in that** the cross section of the bottom profile (4) is flat, curved, or aerodynamically adapted to the periphery of the rotor (5).

11. Device according to any one of the preceding claims, **characterized in that** the device further comprises at least one turbine lamella (12) located in the turbine flow channel (8).

12. Device according to any one of the preceding claims, **characterized in that** two or more edge positioned wings (1) are oriented with their chords against the rotor (5).

## Patentansprüche

1. Vorrichtung zur Erzeugung von elektrischer, mechanischer oder hydraulischer Energie unter Verwendung von Wind- oder Fluidströmungsenergie, wobei die Vorrichtung mindestens einen Rotor (5) umfasst, wobei die Wind- oder Fluidströmung dazu führt, dass sich der Rotor um seine Achse dreht, mindestens ein Bodenprofil (4), das die untere Grenze des Rotors der Vorrichtung definiert, und mindestens einen Flügel, der die obere Grenze des Rotors der Vorrichtung definiert, wobei:
- der Rotor (5) axial mit einem Generator verbunden ist, wobei der Rotor als Querstromturbine ausgebildet ist, wobei die Schaufeln des Rotors peripher angeordnet sind und einen offenen Raum zwischen der Mittelachse des Rotors und den Schaufeln bereitstellen, und wobei die Schaufeln so eingerichtet sind, dass es dem Fluidstrom ermöglicht ist, von beiden gegenüberliegenden Seiten der Rotorachse durchgelassen zu werden, und
- der Flügel (1) kantenpositioniert ist und zwei Seiten aufweist, wobei die Sehne des kantenpositionierten Flügels zum Rotor (5) und zum Bodenprofil (4) ausgerichtet ist, wobei der kantenpositionierte Flügel einen Teil des Wind- oder Fluidstroms über dem Rotor blockiert und bewirkt, dass der Wind oder das Fluid um den kantenpositionierten Flügel (1) fließt, wodurch eine Druckdifferenz zwischen der Vorder- und Rückseite des Rotors (5) erhöht wird, wobei die Druckdifferenz den Wind oder das Fluid durch den Rotor (5) treibt.

2. Vorrichtung nach Anspruch 1, **dadurch gekennzeichnet, dass** der kantenpositionierte Flügel (1) eine massive oder hohle Struktur aufweist.

3. Vorrichtung nach Anspruch 1, **dadurch gekennzeichnet, dass** der kantenpositionierte Flügel (1) in mindestens einem Abschnitt des Flügels mit Perforationen versehen ist.

4. Vorrichtung nach Anspruch 1, **dadurch gekennzeichnet, dass** der kantenpositionierte Flügel (1) kantengeriffelt ist.

5. Vorrichtung nach Anspruch 1, **dadurch gekennzeichnet, dass** der kantenpositionierte Flügel (1) prismenförmig, flach, konvex, konkav oder unterschiedlich strömend dynamisch ausgebildet ist.

6. Vorrichtung nach einem der Ansprüche 1-5, **dadurch gekennzeichnet, dass** die Vorrichtung ferner mindestens einen Längsflügel (2) umfasst, der sich zwischen dem kantenpositionierten Flügel (1) und dem Rotor (5) befindet, wobei der Längsflügel (2) mit seiner Sehne im Wesentlichen senkrecht zu dem kantenpositionierten Flügel (1) ausgerichtet ist.

7. Vorrichtung nach Anspruch 6, **dadurch gekennzeichnet, dass** der Längsflügel (2) in den kantenpositionierten Flügel (1) integriert ist.

8. Vorrichtung nach Anspruch 6 oder 7, **dadurch gekennzeichnet, dass** der Längsflügel (2) in Bezug auf den Flügelquerschnitt prismenförmig, flach, konvex, konkav oder am Umfang des Rotors (5) angepasst ist.

9. Vorrichtung nach einem der vorhergehenden Ansprüche, **dadurch gekennzeichnet, dass** die Vorrichtung ferner mindestens eine Lamelle (3) umfasst, die sich in einem Turbinenströmungskanal (8) befindet, der durch den kantenpositionierten Flügel (1) und das Bodenprofil (4) begrenzt ist.

10. Vorrichtung nach einem der vorhergehenden Ansprüche, **dadurch gekennzeichnet, dass** der Querschnitt des Bodenprofils (4) flach, gekrümmt oder aerodynamisch an den Umfang des Rotors (5) angepasst ist.

11. Vorrichtung nach einem der vorstehenden Ansprüche, **dadurch gekennzeichnet, dass** die Vorrichtung ferner mindestens eine Turbinenlamelle (12) umfasst, die sich im Turbinenströmungskanal (8) befindet.

12. Vorrichtung nach einem der vorstehenden Ansprüche, **dadurch gekennzeichnet, dass** zwei oder mehr kantenpositionierte Flügel (1) mit ihren Sehnen gegen den Rotor (5) ausgerichtet sind.

## Revendications

1. Dispositif de production d'énergie électrique, mécanique ou hydraulique utilisant l'énergie du vent ou d'écoulement de fluide, lequel dispositif comprend au moins un rotor (5), dans lequel le vent ou l'écoulement de fluide entraîne la rotation du rotor autour de son axe, au moins un profil de fond (4) définissant la limite inférieure du rotor du dispositif et au moins une aile définissant la limite supérieure du rotor du dispositif, dans lequel:
le rotor (5) est relié axialement à un générateur, ledit rotor étant conçu comme une turbine à écoulement transversal, dans lequel les pales du rotor sont situées à la périphérie offrant un espace ouvert entre l'axe central du rotor et les pales, et lesdites pales étant configurées pour permettre à l'écoulement de fluide de passer des deux côtés opposés de l'axe du rotor, et
l'aile (1) est positionnée sur le bord et présente deux côtés, la corde de ladite aile positionnée au bord étant orientée vers le rotor (5) et vers le profil de fond (4), dans lequel l'aile positionnée au bord bloque une partie du vent ou de l'écoulement de fluide sur le rotor et fait circuler le vent ou le fluide autour de l'aile positionnée au bord (1), augmentant ainsi la différence de pression entre les côtés avant et arrière du rotor (5), ladite différence de pression entraînant le vent ou le fluide à travers du rotor (5).

2. Dispositif selon la revendication 1, **caractérisé en ce que** l'aile positionnée au bord (1) présente une structure pleine ou creuse.

3. Dispositif selon la revendication 1, **caractérisé en ce que** l'aile positionnée au bord (1) est munie de perforations dans au moins une partie de l'aile.

4. Dispositif selon la revendication 1, **caractérisé en ce que** l'aile positionnée au bord (1) est rainurée en bordure.

5. Dispositif selon la revendication 1, **caractérisé en ce que** l'aile (1) positionnée au bord est en forme de prisme, plate, convexe, concave ou à conçue de manière d'écoulement dynamique différente.

6. Dispositif selon l'une quelconque des revendications 1 à 5, **caractérisé en ce que** le dispositif comprend en outre au moins une aile longitudinale (2) située entre ladite aile au bord (1) et ledit rotor (5), ladite aile longitudinale (2) étant orientée avec sa corde essentiellement perpendiculaire à l'aile au bord (1).

7. Dispositif selon la revendication 6, **caractérisé en ce que** l'aile longitudinale (2) est intégrée à l'aile positionnée au bord (1).

8. Dispositif selon la revendication 6 ou 7, **caractérisé en ce que** l'aile longitudinale (2), par rapport à la section transversale de l'aile, est en forme de prisme, plate, convexe, concave ou adaptée à la périphérie du rotor (5).

9. Dispositif selon l'une quelconque des revendications précédentes, **caractérisé en ce que** le dispositif comprend en outre au moins une lamelle (3) située dans un canal d'écoulement de turbine (8) délimité par l'aile positionnée au bord (1) et le profil de fond (4).

10. Dispositif selon l'une quelconque des revendications précédentes, **caractérisé en ce que** la section transversale du profil de fond (4) est plane, incurvée ou aérodynamiquement adaptée à la périphérie du rotor (5).

11. Dispositif selon l'une quelconque des revendications précédentes, **caractérisé en ce que** le dispositif comprend en outre au moins une lamelle de turbine (12) située dans le canal d'écoulement de la turbine (8).

12. Dispositif selon l'une quelconque des revendications précédentes, **caractérisé en ce que** deux ou plusieurs ailes (1) positionnées au bord sont orientées avec leurs cordes contre le rotor (5).
